# EUROPEAN PATENT APPLICATION

(11) **EP 4 220 924 A1**
(43) Date of publication of application: **02.08.2023**
(21) Application number: 21871673.6
(22) Date of filing: 27.09.2021
(51) Int. Cl.: H02M 3/335

(54) **DIRECT CURRENT-DIRECT CURRENT CONVERSION SYSTEM**

(30) Priority: 27.09.2020 CN 202011035533
(71) Applicant: ZTE Corporation, Shenzhen, Guangdong 518057 (CN)
(72) Inventor: ZHANG, Wei, Shenzhen, Guangdong 518057 (CN); YE, Xin, Shenzhen, Guangdong 518057 (CN); ZHOU, Jianping, Shenzhen, Guangdong 518057 (CN); CHENG, Jun, Shenzhen, Guangdong 518057 (CN); SHI, Sichao, Shenzhen, Guangdong 518057 (CN); LI, Lei, Shenzhen, Guangdong 518057 (CN); SHEN, Xing, Shenzhen, Guangdong 518057 (CN); FAN, Shanshan, Shenzhen, Guangdong 518057 (CN)
(74) Representative: Osterhoff, Utz
(86) International application number: PCT/CN2021/121026
(87) International publication number: WO 2022/063304

(57) **Abstract**

The present application relates to the field of digital control of DC conversion. Embodiments of the present application provide a DC conversion system, including: a main power module for power conversion; and a digital control module. The digital control module is realized by a dual-core single chip, a first processing core of the dual-core single chip is configured to control the main power module, and a second processing core of the dual-core single chip is configured for system-level monitoring and management on the DC conversion system.

## Description

### CROSS-REFERENCE TO RELATED APPLICATIONS

This application claims priority to Chinese Patent Application No. 202011035533.5, filed on September 27, 2020, the entire contents of which are incorporated herein by reference.

### TECHNICAL FIELD

The present application relates to the field of direct current (DC) conversion digital control, in particular to a DC conversion system.

### BACKGROUND

With the widespread use of DC voltage power supply loads, the DC conversion system has been increasingly widely used. The digital control portion of the complex DC-DC conversion system is limited by the input and output port resources and the speed of the processor when running multiple tasks, and the control function is realized in the form of dual chips. The DC conversion system with dual chip is controlled by the corresponding chip by decoupling the converter monitoring function, process control function, memory and interrupt tasks.

However, the hardware circuit design of the system architecture with dual chip is complex, resulting in a long development cycle. When performing software design, the coordination between multiple tasks is complicated. In addition, the power consumption of the dual chip is large, and the communication between the dual chips is poor in real time.

### SUMMARY

Embodiments of the present application provide a direct current (DC) conversion system, including: a main power module for power conversion; and a digital control module; wherein the digital control module is realized by a dual-core single chip, a first processing core of the dual-core single chip is configured to control the main power module, and a second processing core of the dual-core single chip is configured for system-level monitoring and management on the DC conversion system.

### BRIEF DESCRIPTION OF THE DRAWINGS

FIG. 1 is a system block diagram of a direct current (DC) conversion system in a first embodiment.
FIG. 2 is a system architecture diagram of a DC-DC conversion system in the first embodiment.
FIG. 3 is a system block diagram of a unidirectional DC-DC conversion system in the first embodiment.
FIG. 4 is a topological diagram of a full-bridge LLC of a unidirectional DC-DC unit in the first embodiment.
FIG. 5 is a function analysis diagram of the unidirectional DC-DC system in the first embodiment.
FIG. 6 is a chip function and resource allocation diagram of the unidirectional DC-DC system in the first embodiment.
FIG. 7 is a schematic diagram of a relationship between a peripheral hardware circuit unit of the unidirectional DC-DC system and a dual-core MCU in the first embodiment.
FIG. 8 is a system block diagram of a bidirectional DC conversion system based on multiple interleaved bidirectional DC-DC units in a second embodiment.
FIG. 9 is a topology diagram of multiple interleaved parallel H-bridges in the second embodiment.
FIG. 10 is a topology diagram of multiple dual active bridges in the second embodiment.
FIG. 11 is a bidirectional unit control task diagram of the bidirectional DC conversion system based on multiple interleaved bidirectional DC-DC units in the second embodiment.
FIG. 12 is a system monitoring task diagram of the bidirectional DC conversion system based on multiple interleaved bidirectional DC-DC units in the second embodiment.
FIG. 13 is a block diagram of task allocation and resource allocation of the bidirectional DC conversion system based on multiple interleaved bidirectional DC-DC units in the second embodiment.
FIG. 14 is a schematic diagram of the connection between the dual-core MCU and the external hardware circuit unit of the bidirectional DC conversion system based on multiple interleaved bidirectional DC-DC units in the second embodiment.
FIG. 15 is a system block diagram of the bidirectional DC conversion system based on the bidirectional DC-DC unit in the second embodiment.
FIG. 16 is a system function analysis diagram of the bidirectional DC conversion system based on the bidirectional DC-DC unit in the second embodiment.
FIG. 17 is a system chip function and resource allocation diagram of the bidirectional DC conversion system based on the bidirectional DC-DC unit in the second embodiment.
FIG. 18 is a schematic diagram of a relationship between the peripheral hardware circuit unit and the dual-core MCU of the bidirectional DC conversion system based on the bidirectional DC-DC unit in the second embodiment.
FIG. 19 is a block diagram of pulse sequence control in a third embodiment.
FIG. 20 is a block diagram of the pulse sequence control of the bidirectional DC converter in the third embodiment.
FIG. 21 is a buck-boost mode selection unit of the bidirectional DC converter pulse sequence in the third embodiment.
FIG. 22 is a mode pulse selection unit of the bidirectional DC converter pulse sequence in the third embodiment.
FIG. 23 is a basic pulse generator unit of the bidirectional DC converter pulse sequence in the third embodiment.

### DETAILED DESCRIPTION OF THE EMBODIMENTS

The main objective of embodiments of the present application is to provide a direct current (DC) conversion system. The system uses a dual-core single-chip micro-control unit, which can reduce the complexity of the system hardware circuit. In this way, the research and development cycle is shortened, the collaborative cooperation mode between multiple tasks is simplified, power consumption is reduced, and the real-time performance of each task communication is enhanced.

In order to make the purpose, technical solutions and advantages of the embodiments of the present application clearer, the embodiments of the present application will be described in detail below with reference to the accompanying drawings. However, those of ordinary skill in the art can understand that in each embodiment of the application, many technical details are provided for readers to better understand the application. However, even without these technical details and various changes and modifications based on the following embodiments, the technical solutions claimed in the present application can also be realized. The division of the following embodiments is for the convenience of description, and should not constitute any limitation to the specific implementation of the present application, and the embodiments can be combined and referred to each other on the premise of no contradiction.

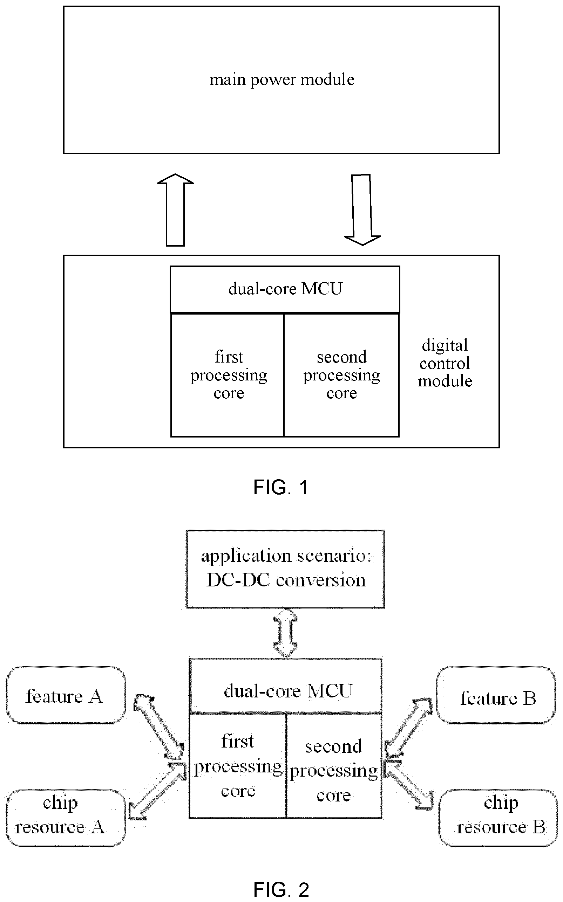

A first embodiment of the present application relates to a DC conversion system. As shown in FIG. 1, in this embodiment, the DC conversion system includes a main power module for power conversion and a digital control module. The digital control module is realized by a dual-core single chip, a first processing core of the dual-core single chip is configured to control the main power module, and a second processing core of the dual-core single chip is configured for system-level monitoring and management on the DC conversion system. The embodiment of the present application uses a dual-core single chip to realize the digital control module of the DC conversion system, and only uses one chip to realize multiple functions, which reduces the complexity of the circuit design of the system, improves the energy density, and shortens the hardware design cycle, there is no need to consider the coordination of multiple tasks between multiple chips, and the coordination of multiple tasks is simplified. Besides, the number of chips is reduced, and the dual-core alternately works in one chip to achieve controllable sleep, which reduces the energy consumption of the main control chip and increases the degree of system integration. Moreover, only the communication between the dual cores needs to be considered, and the dual cores are in the same chip, thereby improving the real-time performance of the communication. In an embodiment, the first processing core is configured to control the main power module according to resources pre-allocated to the first processing core, and the second processing core is configured to perform system-level monitoring and management on the DC conversion system according to resources pre-allocated to the second processing core.

In an embodiment, the resources pre-allocated to the first processing core are determined according to functions allocated for the first processing core, and the resources pre-allocated to the second processing core are determined according to functions allocated for the second processing core. As shown in FIG. 2, FIG. 2 shows the system architecture of the DC-DC conversion system, including the unidirectional DC-DC system. The core of the control system is a dual-core microcontroller unit (MCU). The dual-core MCU includes but is not limited to digital signal processor (DSP), advanced RISC machine (ARM), or the like. The dual-core MCU includes a first processing core and a second processing core. The main functions of the DC-DC conversion system are divided into function A and function B. The first processing core uses chip resource A to complete function A in the DC conversion system. The second processing core uses chip resource B to complete function B in the DC conversion system.

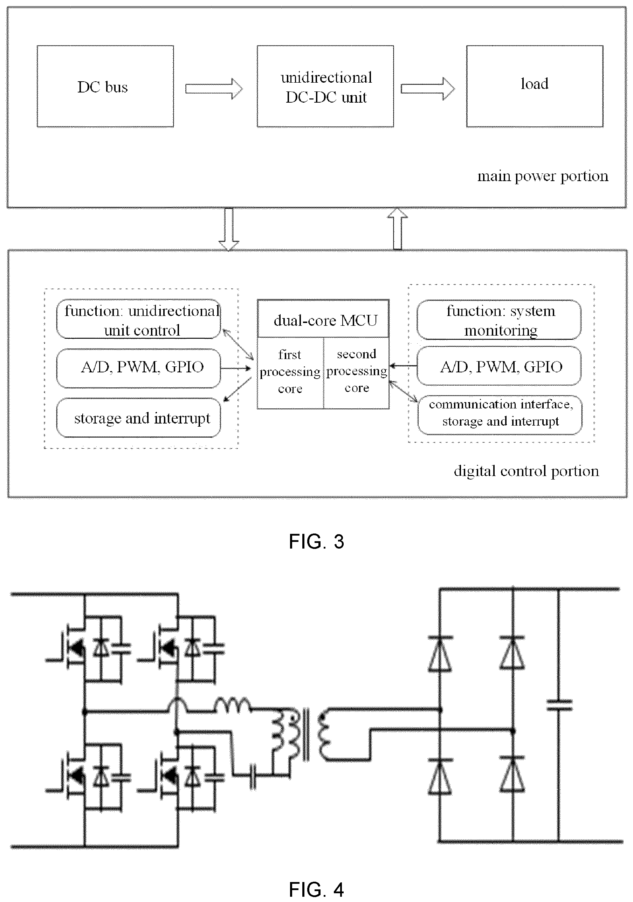

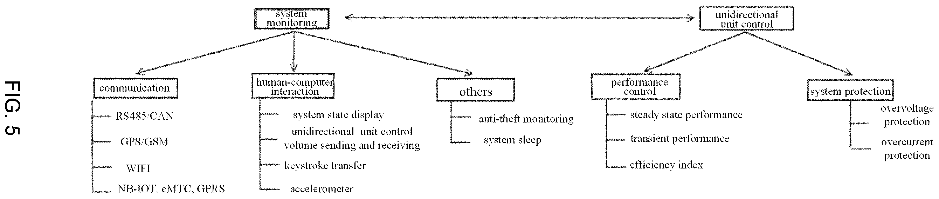

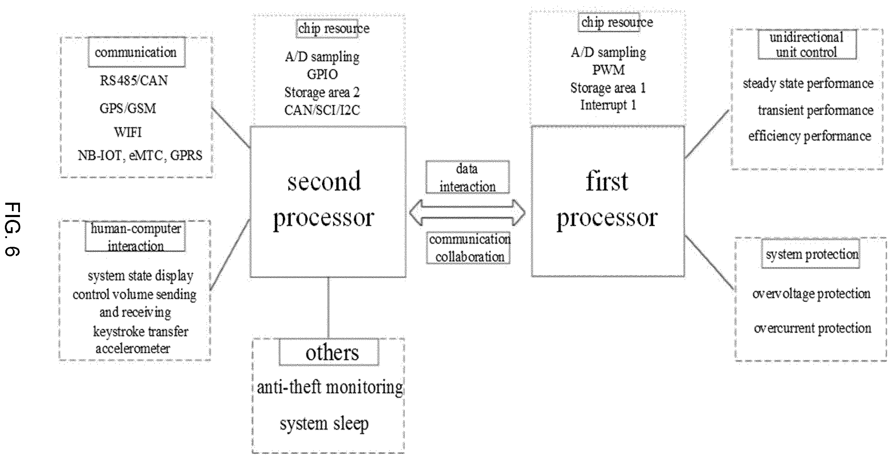

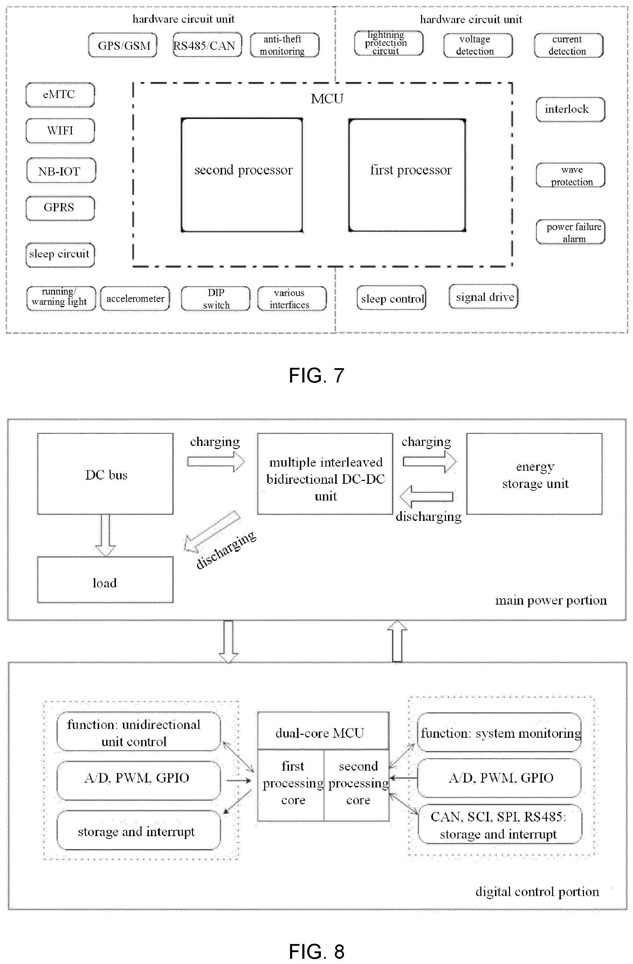

In this embodiment, the DC-DC unit in the main power module of the DC conversion system is a unidirectional DC-DC unit. The DC conversion system is shown in FIG. 3. The main power portion is the main power module, and the digital control portion is the digital control module. The unidirectional DC-DC unit of the main power portion includes but is not limited to single-phase LLC topology, and the basic topology of single-phase full-bridge LLC is shown in FIG. 4. The DC bus in the main power module supplies power to the unidirectional DC-DC unit, and the DC-DC unit supplies power to the load. The unidirectional DC-DC conversion system further includes a digital control module, which is realized by a dual-core single chip. The first processing core of the dual-core single chip is configured to control the main power module, such as controlling the unidirectional DC-DC unit, mainly including performance control and system protection functions. The performance control includes but is not limited to steady state performance, transient performance and efficiency performance. The system protection function includes but is limited to overvoltage protection and overcurrent protection, as shown in FIG. 5. The second processing core is used for system-level monitoring and management on the DC conversion system, that is, system monitoring. The system monitoring mainly includes communication function, human-computer interaction function and other system-level function. The communication function includes but is not limited to RS485/CAN, Global Positioning System (GPS)/Global System for Mobile Communication (GSM), WIFI, Narrow Band Internet of Things (NB-IOT), Enhanced Machine-Type Communication (eMTC), General Packet Radio Service (GPRS) technology and other communication-related functions. The human-computer interaction function includes but is not limited to system status display, control variable sending and receiving, button value transmission, and function related to acceleration sensors. Other functions include anti-theft detection, system sleep and so on. After determining the function, the chip resource allocation of the unidirectional DC-DC system is determined according to the unidirectional DCDC system and the performance characteristics of the first processing core and the second processing core. As shown in FIG. 6, the first processing core, that is, the first processor, is specifically configured to control the main power module according to the resources pre-allocated to the first processing core. The second processing core, that is, the second processor, is specifically configured to perform system-level monitoring and management on the DC conversion system according to resources pre-allocated to the second processing core. According to the different functions of each processor core, internal chip resources are allocated to it. It should be noted that since the communication functions are basically handled by the second processor, a large number of communication resources of the chip are allocated to the second processor, including but not limited to 12C, Serial Communication Interface (SCI), Serial Peripheral Interface (SPI), CAN and other communications. The chip resources allocated for the first processing core are A/D sampling, pulse width modulation (PWM) wave transmission, storage area 1, interrupt 1. The chip resources allocated for the second processing core are A/D sampling, general input/output ports (GPIO), storage area 2 and communication resources. _Based on the above function classification and resource allocation, the schematic diagram of the relationship between the peripheral hardware circuit unit and the dual-core MCU is shown in FIG. 7. The peripheral circuits of the second processor include: RS485/CAN, GPS/GSM, WIFI, NB-IOT, eMTC, GPRS, sleep circuit, running/warning lights, acceleration sensor, DIP switch, various interfaces. The peripheral circuits of the first processor are dormancy control, signal drive, power failure warning, wave-by-wave protection, interlock, current detection, voltage detection, and lightning protection circuits. The above-mentioned functions and divisions are examples, and do not limit the detailed division of functions of the DC changing system.

The embodiment of the present application realizes multiple functions of the unidirectional DC-DC conversion system with only one chip, without considering the circuit design between multiple chips, which reduces the complexity of the circuit design of the system, improves the energy density, shortens the hardware design cycle, and simplifies the coordination between multiple tasks. In addition, the number of chips is reduced, which reduces the energy loss of the main control chip, improves the degree of system integration, and improves the real-time performance of communication.

A second embodiment of the present application relates to a DC conversion system. The second embodiment is substantially the same as the first embodiment, the difference is that the second embodiment of the present application is a bidirectional DC-DC conversion system. The main power module of the bidirectional DC-DC conversion system in this embodiment includes a bidirectional DC-DC unit or multiple interleaved bidirectional DC-DC units.

In an embodiment, the resources include one or any combination of the following: storage resources, interrupt resources, peripheral resources, communication resources, or CPU resources.

In an embodiment, the controlling the main power module includes one or any combination of the following: charge and discharge mode switching, high and low voltage mode switching, voltage stabilization and transient control, or system protection function. The performing the system-level monitoring and management on the DC conversion system includes one or any combination of the following: system sleep control, system anti-theft, human-computer interaction, or control signal sending and receiving. The battery management function is included in the control of the main power module, or included in the system-level monitoring and management on the DC conversion system.

In an embodiment, the functions allocated for the first processing core and the functions allocated for the second processing core are determined according to an application scenario of the DC conversion system and performance characteristics of the first processing core and the second processing core.

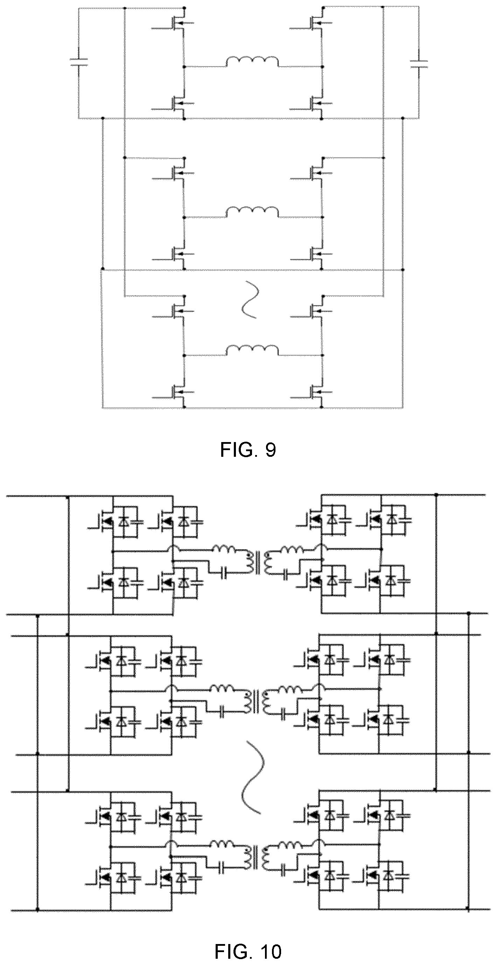

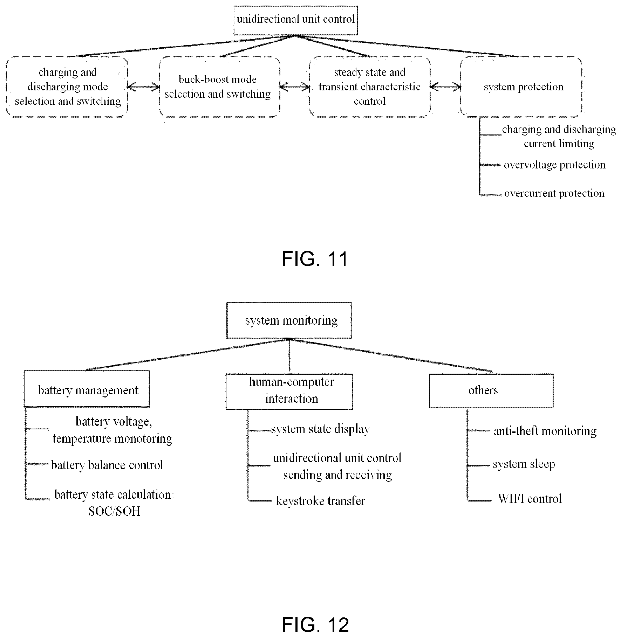

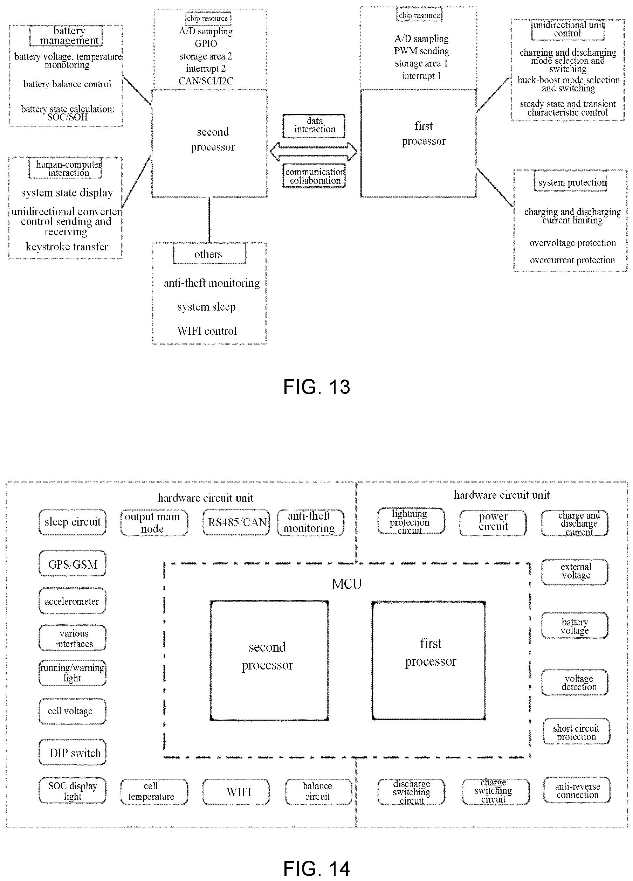

In an embodiment, the DC-DC unit in the main power module of the DC conversion system is a multiple interleaved bidirectional DC-DC unit. The DC-DC unit in the main power module of the DC conversion system is a multiple interleaved bidirectional DC-DC unit. As shown in FIG. 8, the main power portion is the main power module, and the digital control portion is the digital control module. In the main power module, the topology can be a non-isolated topology, such as multiple interleaved parallel H-bridges, the topology of which is shown in FIG. 9. The topology can also be an isolated topology, such as multiple dual active bridges, the topology of which is shown in FIG. 10. In multiple interleaving, which topologies are used is determined according to specific power levels, and the forms of isolated topology and non-isolated topology include but are not limited to the two topologies mentioned above. When the bus is charged, the load is powered by the DC bus, and the energy storage unit is charged through multiple interleaved bidirectional DC-DC units. When the bus is powered off and the DC bus supplies insufficient power, the energy storage unit discharges through multiple interleaved bidirectional DC-DC units to supply power to the load, or multiple interleaved bidirectional DC-DC units and the bus supply power to the load together to ensure normal load power supply. The digital control portion uses a dual-core MCU as the core processor, replacing the original two single-core MCUs. In a dual-core MCU, there will be heterogeneous processors, that is, the functions and performances of the two processors are asymmetrical, and they are suitable for different applications. Usually, one of the processors is suitable for communication and human-computer interaction, and the other processor is suitable for the implementation of control algorithms, Therefore, it is necessary to divide the functions of the processing core according to the bidirectional DC conversion system based on multiple interleaved bidirectional DC-DC units and the performance characteristics of the processing core, so as to better fit the system characteristics and the characteristics of the processing core. In the digital control portion, that is, the digital control module, the first processing core corresponds to the control of the main power module function, the control of the main power module function includes bidirectional unit control, and the second processing core corresponds to system monitoring and management. Each control function includes different tasks, and the task diagram of the bidirectional unit control function is shown in FIG. 11, including tasks: charging and discharging mode selection and switching, buck-boost mode selection and switching, voltage regulation and transient characteristic control in each mode, system protection function, such as, charge and discharge current limiting, overvoltage protection, overcurrent protection. The task diagram of system monitoring functions is shown in FIG. 12, including: battery management, human-computer interaction, communication, protection, or the like. The battery management function includes tasks: battery voltage monitoring, temperature monitoring, battery balance management, battery state calculation, or the like. There is data interaction between the system monitoring function and the two-way DC-DC control function, including but not limited to the interaction of battery data, the interaction of system protection signals, and the interaction of system control variables. The coupling of the above functions is relatively strong. According to the peripherals and storage resources required by each function, the MCU dual-core and other resources are allocated, and the resources are allocated, which can improve the real-time performance of the system operation, and allocate corresponding resources for the processor according to the interrupts and peripherals required by the task. Finally, it is possible to observe whether there is communication and coordination between different processors among various tasks, and select and configure appropriate communication between processors inside the chip. FIG. 13 visually shows a block diagram of dual-core MCU task allocation and resource allocation in the bidirectional DC conversion system. The first processor is responsible for bidirectional DC-DC control functions, including charging and discharging mode switching, high and low voltage mode switching, voltage stabilization and transient control in each mode, system protection and other tasks. The chip resources that need to be used include but are not limited to A/D sampling, PWM wave sending, storage area 1, interrupt 1, or the like. FIG. 14 is a schematic diagram of the connection between the dual-core MCU and the external hardware circuit unit corresponding to the above-mentioned task allocation and resource allocation. The functions shown in FIG. 14 are optional functions, and the actual functions may be less than the above functional units. The second processor is responsible for the system monitoring function, and the tasks include but are not limited to battery management, human-computer interaction, and other system functions. The chip resources that need to be used include but are not limited to A/D sampling, GPIO, storage area 2, interrupt 2, CAN/SCI/I2C and other communications. There is communication and cooperation between the first processor and the second processor to complete the data interaction between the systems.

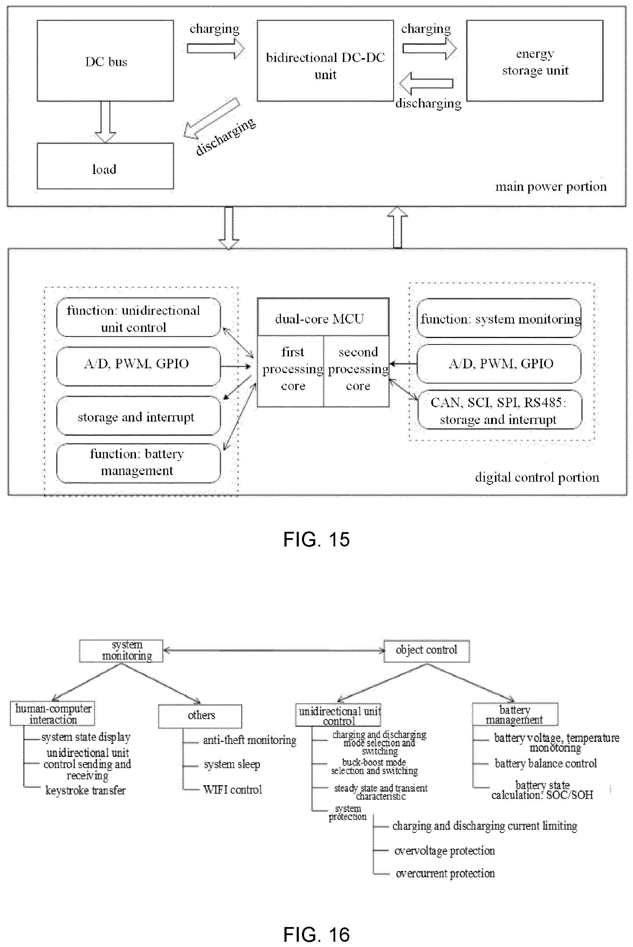

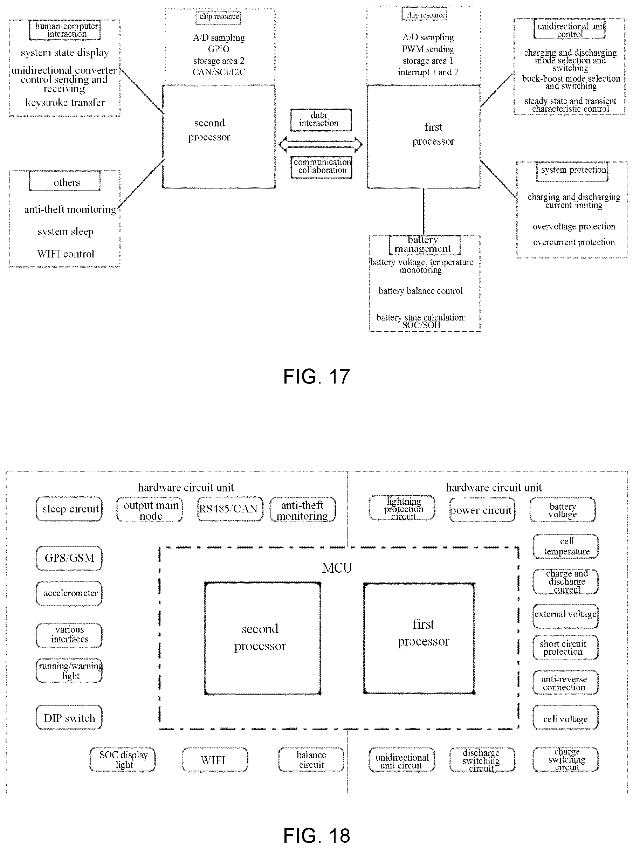

In an embodiment, the DC-DC unit in the main power module of the DC conversion system is a bidirectional DC-DC unit. As shown in FIG. 15, the main power portion is the main power module, and the digital control portion is the digital control module. Different from the above multiple interleaved bidirectional DC-DC units, the bidirectional DC-DC unit in this example is a single isolated or non-isolated topology. In addition, the main power module of this example in the figure is basically the same as the main power module. When the bus is charged normally, the load is powered by the DC bus, and the energy storage unit is charged by the bidirectional DC-DC unit at the same time. When the bus is powered off, the power supply of the DC bus is insufficient, and the energy storage unit discharges through the bidirectional DC-DC unit to supply power to the load, or the bidirectional DC-DC unit and the bus provide power to the load to ensure the normal power supply of the load. The difference between this example and the above mainly lies in that the functions responsible for each core of the dual-core processor in the digital control module have changed greatly. The first processing core is used to control the main power module. The main power module includes: bidirectional DC-DC unit, battery management. In a DC conversion system based on a bidirectional DC-DC unit with an isolated or non-isolated topology, the first processing core mainly implements bidirectional unit control and battery management. The second processing core checks the system-level monitoring and management on the DC conversion system, that is, system monitoring, which is mainly related to human-computer interaction and communication. As shown in FIG. 16, at this moment, the first processing core completes the functions of controlling the bidirectional DC-DC unit and managing the battery. The tasks of bidirectional unit control include: charging and discharging mode selection and switching, buck-boost mode selection, steady-state and transient characteristics, system protection, such as charging and discharging current limiting, over-voltage protection, over-current protection. The tasks of battery management include but are not limited to battery voltage, temperature monitoring, battery balance control, battery status calculation. The calculated battery state may include state of charge (SOC)/battery state of health (SOH). The second processing core completes the system monitoring function, mainly related to human-computer interaction and communication. Human-computer interaction includes but is not limited to system status display, bidirectional unit control data transmission and reception, system sleep, key detection, and other functions, such as anti-theft detection, system sleep, WIFI control, etc. The chip functions and resource allocation based on the above functions are shown in FIG. 17. The first processor, that is, the first processing core, is responsible for increased functions, mainly responsible for object control functions, including bidirectional unit control, battery management control and system protection control. The second processor, that is, the second processing core, is mainly responsible for process control, that is, system monitoring functions, including but not limited to human-computer interaction functions and other system functions, mainly system monitoring and communication. Since the first processor is responsible for two object controls, it is assigned at least two interrupts. Since the battery management function is in charge of the first control core, related hardware units such as battery voltage and battery temperature are unbound from the second control core and bound to the first control core. The distribution of other hardware units is the same as that of the bidirectional DC digital control based on multiple bidirectional DC-DC units. The schematic diagram of the matching relationship between the hardware circuit unit and the dual-core processor is shown in FIG. 18. The peripheral hardware unit of the first processor includes: bidirectional unit circuit, discharge switching circuit, charging switching circuit, cell voltage, anti-reverse connection, short circuit protection, external voltage, charging and discharging power supply, telecom temperature, battery voltage, power supply circuit, lightning protection circuit. The peripheral hardware circuit unit of the second processor includes: anti-theft detection, RS485/CAN, output dry node, sleep circuit, GPS/GSM, acceleration sensor, various interfaces, running/warning lights, DIP switches, SOC display lights, WIFI, equalization circuit.

The above resource allocation and functional division of the DC conversion platform based on bidirectional DC-DC units and multiple interleaved bidirectional DC-DC units is just a proposal, and does not limit the specific allocation and functional division of resources. For other application scenarios, the DC switching platform using dual-core micro-control unit (MCU) can be designed according to specific requirements. The characteristics of the first processing core and the second processing core and applicable occasions in the dual-core MCU are analyzed; the control target of the system is determined, such as, in a bidirectional DC digital system, the control objective at the system level: the system works stably, reliably and efficiently. The bidirectional DC-DC unit controls the target, smoothly realizes the bidirectional multi-mode flow of energy, and achieves superior stability and transient performance. For the battery unit control target, the battery works normally and the voltage is balanced; the functions of the entire control system are obtained, for example, in the bidirectional DC conversion system, the important functions are the bidirectional DC-DC control function and system monitoring function. Bidirectional DC-DC control functions include tasks: charging and discharging mode switching, high and low voltage mode switching, voltage regulation and transient control in each mode, system protection function. System monitoring functions include: battery management function, human-computer interaction function, communication function, protection function, and other functions. Cell management functions include tasks: battery voltage monitoring, temperature monitoring, battery balancing management, or the like. There is data interaction between the system monitoring function and the bidirectional DC-DC control function, including but not limited to the interaction of battery data, the interaction of system protection signals, and the interaction of system control variables. The coupling of the above functions is relatively strong; the peripherals and storage resources required by each function are obtained. Finally, according to the above analysis, the allocation of MCU dual-core and other resources is carried out. For the resource allocation of the DC control platform, the MCU processor and the domain can be assigned storage resources for the first processor and the second processor according to the control task. That is, the first processor is responsible for the bidirectional energy conversion control function, the second processor is responsible for the system monitoring function, and the subtasks under the corresponding functions are also responsible for the corresponding processor. The storage resources are allocated according to its function, if no storage resources are allocated, when the first processor is using direct memory access 1 (DMA1), and the second processor needs to use DMA1, then the second processor will automatically identify the use state of DMA1 and enter the waiting state, which will greatly reduce the real-time performance of the system operation. Therefore, it is necessary to optimize the allocation of storage resources according to the occupation of tasks. Then, interrupts and peripherals are assigned to the dual-core processor according to the peripherals required by the task and the terminal. Finally, the resource allocation is performed according to the communication and coordination between the dual-core processors, that is, observe whether there is communication and coordination between different processors among various tasks, and select and configure appropriate communication between processors inside the chip.

In the second embodiment of the present application, according to the performance of the processing core, the function of dividing the processing core is determined, so that the first processing core and the second processing core can make full use of their own performance, and pre-allocate resources for the processing core. This enables the DC conversion system to obtain resources in time for scheduling during operation, improves the real-time performance of the system operation, and comprehensively improves the efficiency of the DC conversion system.

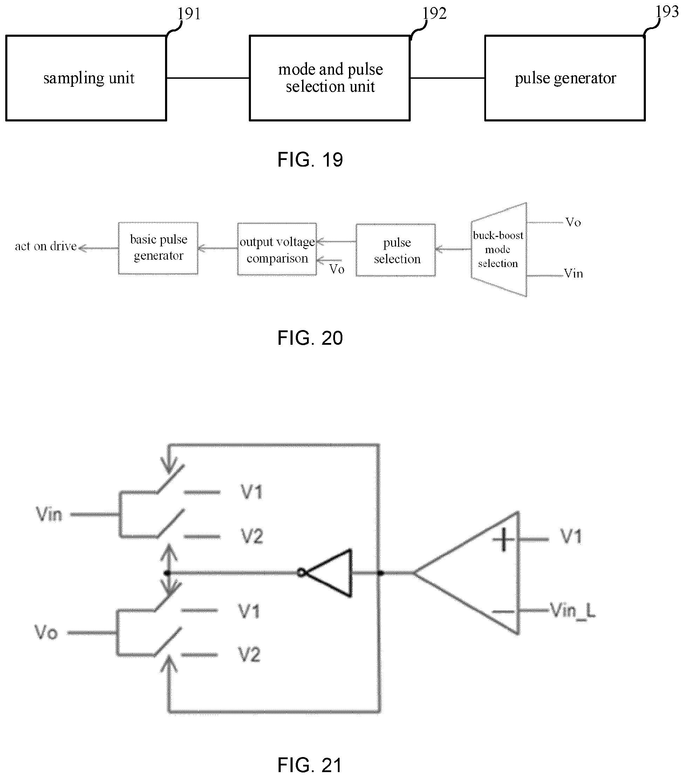

A third embodiment of the present application relates to a DC conversion system, the third embodiment is substantially the same as the second embodiment. The difference is that the control of the main power module in the third embodiment of the present application includes: the control of the bidirectional DC-DC unit in the main power module. The digital control module includes: a sampling unit 191 configured to sample an electrical signal in the main power module; a mode and pulse selection unit 192 configured to determine a working mode of the bidirectional DC-DC unit according to the signal sampled by the sampling unit, and determine a pulse corresponding to the detected working mode according to the determined working mode; and a pulse generator 193 configured to generate a pulse sequence for controlling the bidirectional DC-DC unit according to the pulse determined by the mode and pulse selection unit. The block diagram of the pulse sequence control of the bidirectional DC converter in the third embodiment is shown in FIG. 19.

In an embodiment, the pulse generator includes a basic pulse generator configured to generate basic pulses; and a pulse combination unit configured to combine the basic pulses to obtain the pulse sequence. The pulse combination unit is optional, and the mode and pulse selection unit can precede or follow the basic pulse generator unit.

In an embodiment, the working mode includes boost mode, buck mode and buck-boost mode.

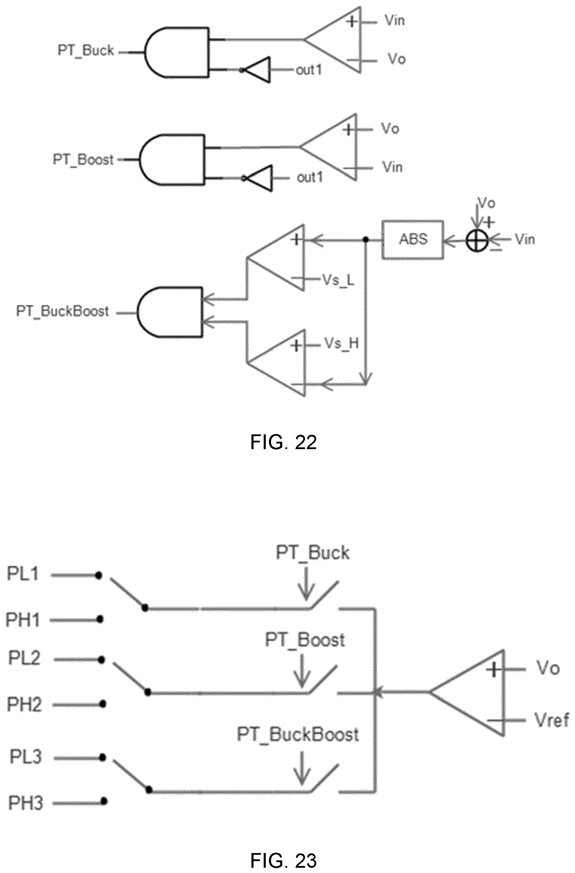

Take the DC-DC unit in the main power module of the DC conversion system as an example of multiple interleaved bidirectional DC-DC units. In this embodiment, the digital control module and the main power module are the same as those based on multiple interleaved bidirectional DC-DC units in the second embodiment. The control functions and resource allocation corresponding to the digital control module, the first processing core and the second processing core are also the same, and will not be repeated herein. This embodiment describes the pulse sequence control of the digital control module in the DC conversion system based on multiple interleaved bidirectional DC-DC units. The implementation block diagram of the pulse sequence control of the bidirectional DC converter in this system is shown in FIG. 20. After the charge and discharge mode judgment is completed, the output voltage Vo and the input voltage Vin are determined. In charging mode, Vo is the battery voltage, and Vin is the bus voltage. In the discharging mode, Vo is the bus voltage, and Vin is the battery voltage. The values of Vin and Vo are compared to determine the working mode of the current converter. The working modes include: boost mode, buck mode or buck-boost mode. Different modes require different pulse sequences. The buck-boost mode selection unit is shown in FIG. 21. In FIG. 21, V1 is the DC bus voltage, V2 is the energy storage voltage, and Vin_L is the voltage threshold for judging whether the DC bus is powered off. The mode pulse selection unit is shown in FIG. 22. Vs_L and Vs_H are the allowable range of the difference between Vin and Vo. In this embodiment, the boost mode pulse sequence is PT_Boost, and the buck mode pulse sequence is PT_Buck. The output voltage is compared with the reference voltage to determine the generation of basic pulses PLx and PHx. According to the current mode situation and the basic pulse, combine to generate the required pulse sequence. At this time, the pulse sequence of the buck-boost mode is generated by combining the pulses of the boost mode and the pulses of the buck mode. However, the buck-boost mode pulse sequence can also be set to PT_BuckBoost, then the pulse combination unit can be canceled. The basic pulse generator unit is shown in FIG. 23. In this embodiment, the generated driving signal acts on the controlled switching tubes in the current mode, and the remaining switching tubes will be in the normally open or normally closed state according to the current mode, and are directly controlled by the mode, which will not be described in detail here. In this embodiment, the basic pulse sequence may be a voltage-type pulse sequence or a current-type pulse sequence. FIG. 21 to FIG. 23 are logic analysis of specific units in the control block diagram. During implementation, digital controllers such as DSP, Field-Programmable Gate Array (FPGA), or the like, can be used to realize the above logic control, and logic circuits can also be used to realize the above functions.

Compared with the traditional bidirectional direct current system, in some embodiments, the control of the bidirectional converter mostly adopts the voltage type control, combined with the switching of three modes, to realize the regulation of the output voltage. Based on the inherent problems of the voltage type, combined with the influence of working in Boost mode and the right half-plane zero point in Buck-Boost mode, in order to make the converter work stably, the crossover frequency is reduced when adjusting the compensator, resulting in a slow transient response of the bidirectional converter. At the same time, the switching of the three modes means that the converter works in three working modes. When the traditional voltage control is adopted, the compensator needs to be adjusted for each working mode, and the adjustment workload of the compensator is at least three times that of the original one. In order to solve the above problems, this embodiment applies nonlinear pulse sequence control to the bidirectional converter for the control of the bidirectional DC converter. A sampling unit, a mode and pulse selection unit, and a pulse generator are used. Compared with the traditional linear control, the pulse sequence control proposed in the embodiment of the present application improves the transient response of the bidirectional converter in multiple modes, and solves the difficult and complicated problem of compensator debugging in multiple modes. In addition, in the bidirectional converter, the pulse sequence control is used, through the combined optimization scheme design of the pulse, the stable operation of the converter in three working modes is realized, which have good stability performance and transient performance, and shorten the research and development cycle of the control strategy of the bidirectional converter.

As can be seen, in the third embodiment of the present application, the nonlinear pulse sequence control is applied to the bidirectional converter, which improves the transient response of the bidirectional converter in multiple modes, and solves the difficult and complicated problem of compensator debugging in multiple modes, realizes the stable operation of the converter in three working modes, with good stability and transient performance, shortening the research and development cycle of the control strategy of the bidirectional converter. Moreover, using a dual-core single chip, only one chip is used to realize multiple functions, which reduces the complexity of the circuit design of the system, improves the energy density, and shortens the hardware design cycle. There is no need to consider the coordination of multiple tasks between multiple chips, which simplifies the coordination of multiple tasks. In addition, the number of chips is reduced, and the dual cores in one chip work alternately to achieve controllable sleep, which reduces the energy consumption of the main control chip and increases the degree of system integration. Moreover, only the communication between the dual cores needs to be considered, and the dual cores are in the same chip, which improves the real-time performance of communication.

Those of ordinary skill in the art can understand that each of the above-mentioned implementation modes is a specific example for implementing the present application. In practice, however, various changes may be made in form and detail without departing from the scope of the present application.

## Claims

1. A direct current (DC) conversion system, **characterized by** comprising:
a main power module for power conversion; and
a digital control module;
wherein the digital control module is realized by a dual-core single chip, a first processing core of the dual-core single chip is configured to control the main power module, and a second processing core of the dual-core single chip is configured for system-level monitoring and management on the DC conversion system.

2. The DC conversion system according to claim 1, wherein the controlling the main power module comprises controlling a bidirectional DC-DC unit in the main power module;
the digital control module comprises:
a sampling unit configured to sample an electrical signal in the main power module;
a mode and pulse selection unit configured to determine a working mode of the bidirectional DC-DC unit according to the signal sampled by the sampling unit, and determine a pulse corresponding to the detected working mode according to the determined working mode; and
a pulse generator configured to generate a pulse sequence for controlling the bidirectional DC-DC unit according to the pulse determined by the mode and pulse selection unit.

3. The DC conversion system according to claim 2, wherein the pulse generator comprises:
a basic pulse generator configured to generate basic pulses; and
a pulse combination unit configured to combine the basic pulses to obtain the pulse sequence.

4. The DC conversion system according to claim 2 or claim 3, wherein the working mode comprises boost mode, buck mode and buck-boost mode.

5. The DC conversion system according to any one of claims 1 to 4, wherein the first processing core is configured to control the main power module according to resources pre-allocated to the first processing core, and the second processing core is configured to perform system-level monitoring and management on the DC conversion system according to resources pre-allocated to the second processing core.

6. The DC conversion system according to claim 5, wherein the resources comprise one or any combination of the following: storage resources, interrupt resources, peripheral resources, communication resources, or CPU resources.

7. The DC conversion system according to claim 5 or claim 6, wherein the controlling the main power module comprises one or any combination of the following:
charge and discharge mode switching, high and low voltage mode switching, voltage stabilization and transient control, or system protection function;
the performing the system-level monitoring and management on the DC conversion system comprises one or any combination of the following:
system sleep control, system anti-theft, human-computer interaction, or control signal sending and receiving;
wherein the battery management function is included in the control of the main power module, or included in the system-level monitoring and management on the DC conversion system.

8. The DC conversion system according to any one of claims 5 to 7, wherein the resources pre-allocated to the first processing core are determined according to functions allocated for the first processing core, and the resources pre-allocated to the second processing core are determined according to functions allocated for the second processing core.

9. The DC conversion system according to claim 8, wherein the functions allocated for the first processing core and the functions allocated for the second processing core are determined according to an application scenario of the DC conversion system and performance characteristics of the first processing core and the second processing core.

10. The DC conversion system according to any one of claims 1 to 9, wherein the DC-DC unit in the main power module comprises any of the following: unidirectional DC-DC unit, bidirectional DC-DC unit, multiple interleaved bidirectional DC-DC unit, or multiple interleaved unidirectional DC-DC unit.
